# EUROPÄISCHE PATENTSCHRIFT

(11) **EP 3 285 046 B1**
(45) Veröffentlichungstag und Bekanntmachung des Hinweises auf die Patenterteilung: **22.05.2019**
(21) Anmeldenummer: 17183441.9
(22) Anmeldetag: 27.07.2017
(51) Int. Cl.: G01D 5/14

(54) **BEWEGUNGSVORRICHTUNG MIT MAGNETISCHER POSITIONSBESTIMMUNG UND DATENÜBERTRAGUNGSVORRICHTUNG**
MOVEMENT DEVICE WITH MAGNETIC POSITION DETERMINATION AND DATA TRANSMISSION DEVICE
DISPOSITIF DE MOUVEMENT PERMETTANT LA DÉTECTION MAGNÉTIQUE DE POSITION ET DISPOSITIF DE TRANSMISSION DE DONNÉES

(30) Priorität: 16.08.2016 DE 102016215212
(43) Veröffentlichungstag der Anmeldung: 21.02.2018
(73) Patentinhaber: Robert Bosch GmbH, 70442 Stuttgart (DE)
(72) Erfinder: Seiz, Daniel, 71106 Magstadt (DE)
(74) Vertreter: Maiß, Harald

(56) Entgegenhaltungen:
- US-A- 6 144 119
- US-A1- 2010 039 103
- US-A1- 2016 161 288

## Beschreibung

Die Erfindung betrifft eine Bewegungsvorrichtung gemäß dem Oberbegriff von Anspruch 1 und ein Verfahren zu deren Betrieb.

Aus der US 2016/0161288 A1 ist eine Bewegungsvorrichtung bekannt, die in Form eines planaren Linearmotors ausgebildet ist, bei dem ausschließlich der Stator bestromt wird, nicht jedoch der bewegliche Körper, der mit Permanentmagneten versehen ist. Der Stator hat eine ebene Bewegungsoberfläche, wobei sich der bewegliche Körper insbesondere in zwei zueinander senkrechten, translatorischen Bewegungsfreiheitsgraden gegenüber dem Stator entlang der Bewegungsoberfläche bewegen kann. Die Lage des beweglichen Körpers gegenüber dem Stator wird mittels einer Vielzahl von ersten Magnetfeldsensoren bestimmt, welche rastartig verteilt über die Bewegungsoberfläche angeordnet sind. Die ersten Magnetfeldsensoren messen das Magnetfeld der Permanentmagnete am beweglichen Körper, wobei unabhängig von der Stellung des beweglichen Körpers immer mehrere erste Magnetfeldsensoren vorhanden sind, welche sich im Feldbereich der Permanentmagnete am beweglichen Körper befinden.

Aus der US 6 144 119 ist eine weitere Bewegungsvorrichtung in Form eines planaren Linearmotors bekannt. Aus der US 2010/0039103 A1 ist eine eindimensionale Bewegungsvorrichtung bekannt.

Ein Vorteil der vorliegenden Erfindung besteht darin, dass Informationen vom beweglichen Körper zum Stator hin übertragbar sind. Bei den Informationen kann es sich beispielsweise um eine eindeutige Kennnummer des betreffenden beweglichen Körpers handeln. Die Bewegungsvorrichtung ist besonders einfach und kostengünstig aufgebaut, da die ohnehin vorhandenen ersten Magnetfeldsensoren zur Datenübertragung genutzt werden.

Gemäß Anspruch 1 wird vorgeschlagen, dass der bewegliche Körper zumindest eine erste Magnetfelderzeugungsvorrichtung aufweist, welche derart abseits des zumindest einen Permanentmagneten angeordnet ist, dass ein Magnetfeld der ersten Magnetfelderzeugungsvorrichtung mit zumindest einem ersten Magnetfeldsensor messbar ist. Der Stator ist wahlweise unbeweglich oder beweglich gelagert. Der bewegliche Körper hat vorzugsweise sechs Bewegungsfreiheitsgrade relativ zum Stator, wobei er höchst vorzugsweise ausschließlich durch Magnetkräfte mit geringem Abstand über der Bewegungsoberfläche in der Schwebe haltbar ist. Die Bewegungsoberfläche ist vorzugsweise eben ausgebildet. Der bewegliche Körper ist vorzugsweise kleiner als der Stator, wobei er höchst vorzugsweise ausschließlich innerhalb einer Seitenumrandung der Bewegungsoberfläche bewegbar ist. Bei den ersten Magnetfeldsensoren handelt es sich beispielsweise um Hall-Sensoren, GMR-Sensoren, MEMS-Sensoren oder sonstige, die magnetische Flussdichte erfassende, Sensoren. Vorzugsweise sind mit den ersten Magnetfeldsensoren statische und/oder langsam veränderliche Magnetfeder messbar.

Der wenigstens eine Permanentmagnet hat vorzugsweise ein starkes Magnetfeld, wobei er beispielsweise als Neodym-Magnet, insbesondere als Neodym-Eisen-Bor-Magnet ausgebildet ist. Das Magnetfeld der ersten Magnetfelderzeugungsvorrichtung ist demgegenüber im Regelfall schwächer. Die ersten Magnetfeldsensoren messen im Regelfall eine Überlagerung dieser beiden Magnetfelder, wobei die relative Anordnung der genannten Teile darüber entscheidet, welche Magnetfeldkomponente wie stark ausgeprägt ist. Das Magnetfeld der ersten Magnetfelderzeugungsvorrichtung weist vorzugsweise eine höhere Frequenz auf als das Magnetfeld des wenigstens einen Permanentmagnets, welches sich nur aufgrund der Bewegung des beweglichen Körpers ändert. Damit ist die erstgenannte Magnetfeldkomponente ohne weiteres aus dem Magnetfeldsignal der ersten Magnetfeldsensoren herausfilterbar. Das Magnetfeld der ersten Magnetfelderzeugungsvorrichtung ist insbesondere dann messbar im Sinne des Patentanspruchs, wenn das Auflösungsvermögen der ersten Magnetfeldsensoren so groß ist, dass auch nach der vorgenannten Filterung ein Magnetfeldsignal vorliegt, welches eine Übertragung von Informationen ermöglicht. Die ersten Magnetfeldsensoren sind vorzugsweise raster- bzw. matrixartig verteilt im Bereich der Bewegungsfläche angeordnet.

In den abhängigen Ansprüchen sind vorteilhafte Weiterbildungen und Verbesserungen der Erfindung angegeben.

Es kann vorgesehen sein, dass die erste Magnetfelderzeugungsvorrichtung zumindest eine erste Spule umfasst, welche derart abseits des zumindest einen Permanentmagneten angeordnet ist, dass ein Magnetfeld der zumindest einen ersten Spule mit zumindest einem ersten Magnetfeldsensor messbar ist. Durch geeignete Bestromung der ersten Spule kann ein Magnetfeld erzeugt werden, mit welchem Informationen übertragbar sind.

Es kann vorgesehen sein, dass die ersten Magnetfeldsensoren derart verteilt im Bereich der Bewegungsoberfläche angeordnet sind, dass in jeder Stellung des beweglichen Körpers relativ zum Stator das Magnetfeld der ersten Magnetfelderzeugungsvorrichtung mit zumindest einem ersten Magnetfeldsensor messbar ist. Hierdurch wird sichergestellt, dass die genannte Datenübertragung in jeder Stellung des beweglichen Körpers möglich ist. Die zweite Magnetfelderzeugungsvorrichtung ist vorzugsweise kleiner ausgebildet als die Permanentmagnete am beweglichen Körper.

Es kann vorgesehen sein, dass der Stator eine Vielzahl von langgestreckten zweiten Spulen aufweist, wobei die zweiten Spulen eine Vielzahl von ersten und eine Vielzahl von zweiten Leiterbahnabschnitten umfassen, wobei sich die ersten Leiterbahnabschnitte in Richtung einer ersten Achse erstrecken, wobei sich die zweiten Leiterbahnabschnitte in Richtung einer von der ersten verschiedenen zweiten Achse erstrecken, wobei der bewegliche Körper zumindest zwei Permanentmagnetanordnungen umfasst, wobei jede Permanentmagnetanordnung in Richtung einer zugeordneten dritten Achse eine sich periodisch ändernde Magnetisierungsrichtung aufweist, wobei zumindest zwei verschiedene dritte Achsen vorhanden sind, wobei zumindest ein Verstärker vorgesehen ist, mit dem Strom in die ersten und/oder die zweiten Leiterbahnabschnitte derart einspeisbar ist, dass sich der bewegliche Körper relativ zum Stator bewegt, wobei die ersten Magnetfeldsensoren derart verteilt im Bereich der Bewegungsoberfläche angeordnet sind, dass in jeder Stellung des beweglichen Körpers relativ zum Stator für jede Permanentmagnetanordnung zumindest ein erster Magnetfeldsensor vorhanden sind, mit dem ein betreffendes Magnetfeld messbar ist. Dementsprechend wird der bewegliche Körper in der Art eines planaren Linearmotors angetrieben, wie er beispielsweise aus der US 2016/0161288 A1 oder der US 9 202 719 B2 bekannt ist. Die dort verwendeten Permanentmagnetanordnungen sind besonders gut zur Verwendung mit der vorliegenden Erfindung geeignet, da am Stator Bereiche vorhanden sind, in denen das permanentmagnetische Feld schwach ist, so dass es die Datenübertragung wenig stört. Die erste und die zweite Achse sind vorzugsweise parallel zur Bewegungsoberfläche angeordnet. Die Permanentmagnetanordnungen sind vorzugsweise jeweils in Form eines Halbach-Arrays ausgebildet, wobei das stärkste Magnetfeld höchst vorzugsweise auf der der Bewegungsoberfläche zugewandten Seite des beweglichen Körpers angeordnet ist. Die ersten und die zweiten Leiterbahnabschnitte sind vorzugsweise in unterschiedlichen Schichten angeordnet, die parallel zur Bewegungsoberfläche übereinander im Stator angeordnet sind.

Es kann vorgesehen sein, dass die Permanentmagnetanordnungen einen Freiraum umgrenzen, wobei zumindest eine erste Magnetfelderzeugungsvorrichtung innerhalb des Freiraums angeordnet ist. Ein derartiger beweglicher Körper benötigt besonders wenig Bauraum. Darüber hinaus ist das permanentmagnetische Feld in dem genannten Freiraum näherungsweise konstant.

Es kann vorgesehen sein, dass die Bewegungsoberfläche von einer ersten Abdeckung aus Metall gebildet wird, wobei die ersten Magnetfeldsensoren und gewünschtenfalls die zweiten Spulen von der ersten Abdeckung überdeckt sind. Die erste Abdeckung hat vorzugsweise eine konstante Dicke, wobei sie insbesondere in Form eines Blechs ausgebildet ist. Das genannte Metall ist vorzugsweise nicht magnetisch, insbesondere nicht ferromagnetisch. Bei dem genannten Metall handelt es sich beispielsweise um nichtmagnetischen, rostfreien Stahl.

Am beweglichen Körper kann eine zweite Abdeckung vorgesehen sein, welche analog zur ersten Abdeckung ausgebildet ist, wobei die zweite Abdeckung den wenigstens einen Permanentmagneten und die wenigstens eine erste Magnetfelderzeugungsvorrichtung überdeckt.

Es kann vorgesehen sein, dass die ersten Magnetfeldsensoren an eine Positionsbestimmungsvorrichtung angeschlossen sind, um von den ersten Magnetfeldsensoren ausgebbare Magnetfeldsignale an die Positionsbestimmungsvorrichtung zu übertragen, wobei die Positionsbestimmungsvorrichtung so eingerichtet ist, dass unter Verwendung der Magnetfeldsignale die Stellung des beweglichen Körpers relativ zum Stator bestimmbar ist. Hierdurch wird die bereits angesprochene Positionsbestimmung auf einfache Weise ermöglicht.

Es ist vorgesehen, dass der zumindest eine bewegliche Körper jeweils eine zugeordnete Modulationsvorrichtung aufweist, welche an die erste Magnetfelderzeugungsvorrichtung angeschlossen ist, wobei die Modulationsvorrichtung so eingerichtet ist, dass mittels der ersten Magnetfelderzeugungsvorrichtung ein magnetisches Wechselfeld erzeugbar ist, auf dem eine zu übertragende Information aufmoduliert ist. Hierdurch wird die bereits angesprochene Informations- bzw. Datenübertragung auf einfache Weise ermöglicht.

Es kann vorgesehen sein, dass die ersten Magnetfeldsensoren an eine Demodulationsvorrichtung angeschlossen sind, welche derart eingerichtet ist, dass die zu übertragende Information durch Demodulation aus den Magnetfeldsignalen der ersten Magnetfeldsensoren ermittelbar ist. Hierdurch wird die bereits angesprochene Informations- bzw. Datenübertragung auf einfache Weise ermöglicht.

Es kann vorgesehen sein, dass zumindest ein beweglicher Körper jeweils eine zugeordnete Energieversorgungsvorrichtung aufweist, wobei die erste Magnetfelderzeugungsvorrichtung und/oder die Modulationsvorrichtung an die Energieversorgungsvorrichtung angeschlossen sind. Wie oben bereits angesprochen, ist die vorliegende Erfindung in erster Line für einen beweglichen Körper gedacht, der im Rahmen des Antriebs nicht mit Strom versorgt wird. Durch die Energieversorgungsvorrichtung steht auf dem Stator dennoch Energie zur Verfügung. Bei der Energieversorgungsvorrichtung kann es sich um eine Batterie handeln, die vorzugsweise wiederaufladbar ist. Es kann auch ein Kondensator vorgesehen sein, der eine besonders hohe Kapazität aufweist. Weiter kann daran gedacht sein, Energie induktiv vom Stator auf den beweglichen Körper zu übertragen. Vorzugsweise finden hierbei die bereits angesprochenen ersten und/oder zweiten Leiterbahnabschnitte Verwendung.

Es können mehrere erste Magnetfelderzeugungsvorrichtungen vorgesehen sein, die derart beabstandet voneinander angeordnet sind, dass deren Magnetfeld von unterschiedlichen ersten Magnetfeldsensoren messbar ist. Hierdurch können in der Art eines Raummultiplexverfahrens mehrere Kanäle zur Datenübertragung bereitgestellt werden, so dass die erzielbare Datenübertragungsgeschwindigkeit hoch ist. Eine mögliche gegenseitige Beeinflussung der verschiedenen Kanäle wird vorzugsweise durch geeignete Auswertealgorithmen herausgerechnet.

Es kann vorgesehen sein, dass der Stator wenigstens eine zweite Magnetfelderzeugungsvorrichtung aufweist, wobei der bewegliche Körper wenigstens einen zweiten Magnetfeldsensor aufweist, welcher durch Bewegung des beweglichen Körpers in einen Feldbereich einer zweiten Magnetfelderzeugungsvorrichtung bringbar ist. Hierdurch wird eine Informationsübertragung vom Stator zum beweglichen Körper ermöglicht. Im einfachsten Fall ist diese Datenübertragung nur in einer bestimmten Stellung des beweglichen Körpers möglich. Es ist denkbar, so viele zweite Magnetfelderzeugungsvorrichtungen bereitzustellen, dass die genannte Datenübertragung in jeder Stellung des beweglichen Körpers möglich ist. Die zweiten Magnetfelderzeugungsvorrichtungen sind vorzugsweise analog zur ersten Magnetfelderzeugungsvorrichtung ausgebildet und zwar einschließlich der Signalmodulation. Die zweiten Magnetfeldsensoren sind vorzugsweise analog zu den ersten Magnetfeldsensoren ausgebildet und zwar einschließlich der Signaldemodulation. Es ist denkbar, die ersten Spulen als zweite Magnetfelderzeugungsvorrichtung zu verwenden.

Schutz wird außerdem für ein Verfahren zum Betrieb einer erfindungsgemäßen Bewegungsvorrichtung beansprucht, wobei mittels der ersten Magnetfelderzeugungsvorrichtung ein magnetisches Wechselfeld erzeugt wird, dessen Frequenz kleiner als 100 kHz und vorzugsweise kleiner als 10 kHz ist. Wie bereits angesprochen, wird die Bewegungsvorrichtung vorzugsweise mit einer ersten und/oder einer zweiten Abdeckung verwendet, welche aus Metall besteht. Bei den vorgeschlagenen Frequenzen wird das magnetische Wechselfeld nur wenig durch Wirbelströme in der ersten bzw. der zweiten Abdeckung gedämpft.

Es kann vorgesehen sein, dass dem magnetischen Wechselfeld eine zu übertragende Information aufmoduliert ist. Bei der entsprechenden Modulation kann es sich beispielsweise um eine Amplitudenmodulation, eine Frequenzmodulation, eine Phasenmodulation oder eine beliebige Kombination hieraus, beispielsweise eine QAM, handeln. Bei der zu übertragenden Information handelt es sich vorzugsweise um eine Kennnummer des beweglichen Körpers, wobei vorzugsweise mehrere bewegliche Körper vorhanden sind, denen jeweils eine eindeutige Kennnummer zugeordnet ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine grobschematische Seitenansicht einer erfindungsgemäßen Bewegungsvorrichtung;
- Fig. 2: eine grobschematische Draufsicht der Bewegungsvorrichtung nach Fig. 1;
- Fig. 3: eine grobschematische Ansicht des beweglichen Körpers vom Stator her; und
- Fig. 4: eine grobschematische Draufsicht der zweiten Spulen.

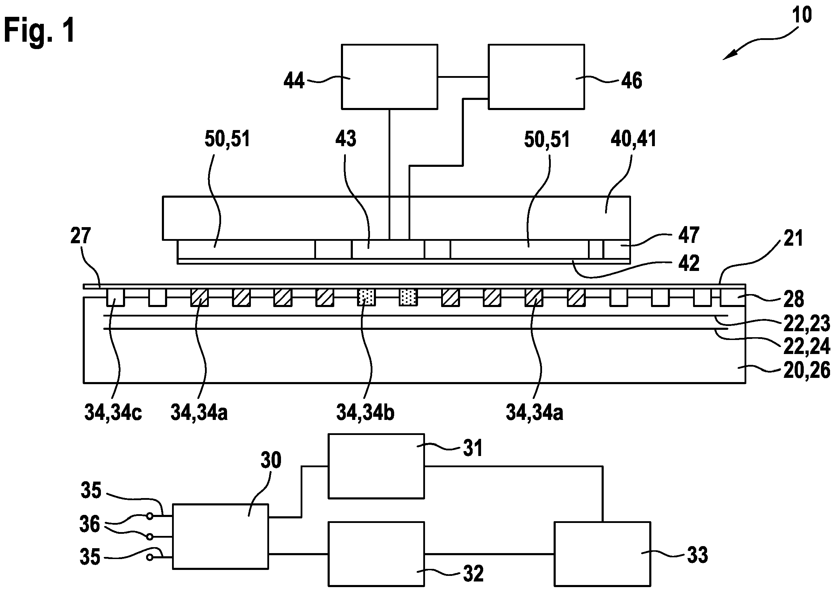

Fig. 1 zeigt eine grobschematische Seitenansicht einer erfindungsgemäßen Bewegungsvorrichtung 10. Die Bewegungsvorrichtung 10 umfasst einen Stator 20 und einen relativ zum Stator 20 beweglichen Körper 40. Der Stator 20 hat eine Bewegungsoberfläche 21, die vorliegend eben ausgebildet ist, wobei sie von einer ersten Abdeckung 27 gebildet wird. Im Betrieb wird der bewegliche Körper 40 vorzugsweise durch elektromagnetische Kräfte mit geringem Abstand zur Bewegungsoberfläche 21 in der Schwebe gehalten. Er muss sich dabei nicht notwendigerweise, wie in Fig. 1 dargestellt, oberhalb der Bewegungsoberfläche 21 befinden. Die Bewegungsvorrichtung 10 kann vielmehr in jeder beliebigen Drehlage angeordnet werden. Der bewegliche Körper 40 hat vorliegend insgesamt sechs Bewegungsfreiheitsgrade, nämlich drei translatorische und drei rotatorische.

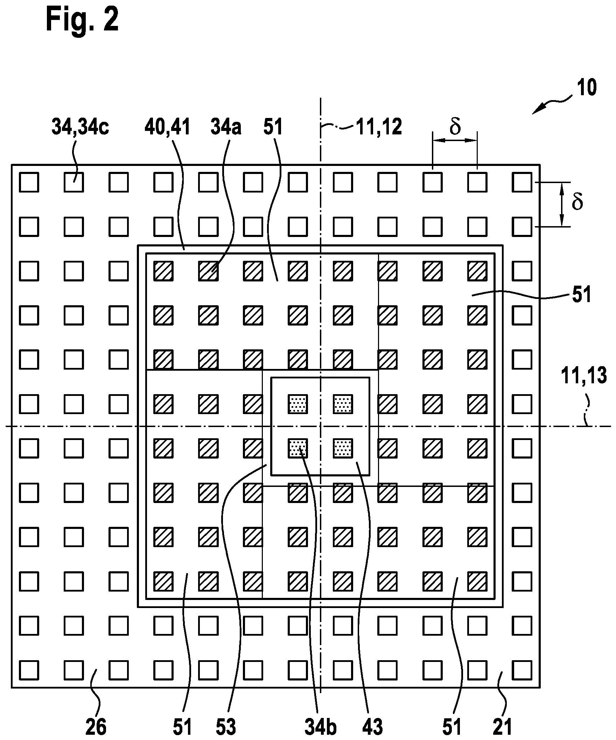

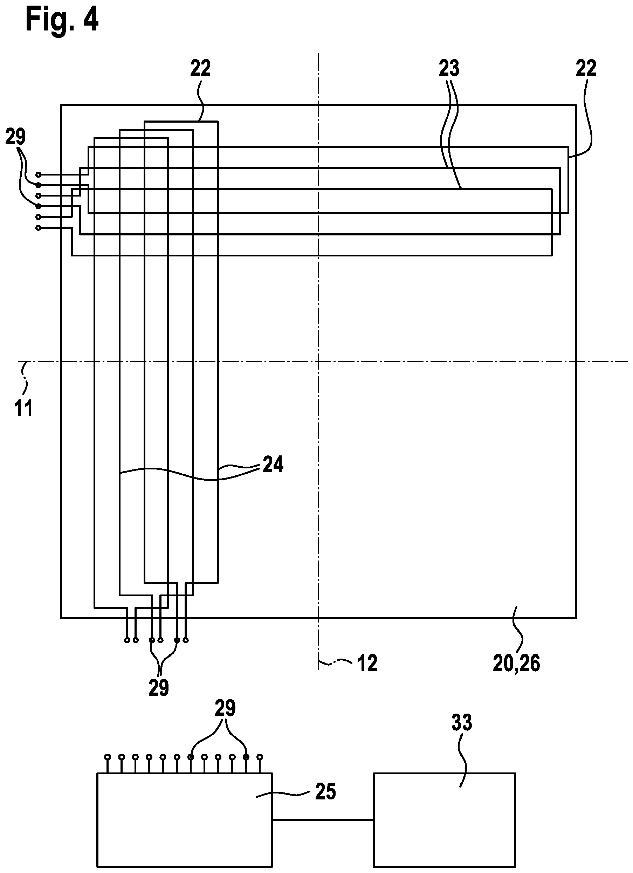

Der Stator 20 ist insgesamt in Form einer ebenen Platte mit konstanter Dicke ausgebildet, deren oberste Lage die erste Abdeckung 27 bildet. Die erste Abdeckung 27 ist in Form eines Metallblechs ausgebildet, welches eine konstante Dicke aufweist. Das genannte Metall ist vorzugsweise nicht ferromagnetisch, wobei beispielsweise nichtrostender, nichtmagnetischer Stahl verwendet wird. Unterhalb der ersten Abdeckung 27 ist eine Vielzahl von ersten Magnetfeldsensoren 34 angeordnet. Die ersten Magnetfeldsensoren 34 sind, wie in Fig. 2 dargestellt, raster- bzw. matrixartig verteilt im Bereich der Bewegungsoberfläche 21 angeordnet, so dass sich unabhängig von der Lage des beweglichen Körpers 40 immer mehrere erste Magnetfeldsensoren 34 im Bereich des beweglichen Körpers 40 befinden. Die ersten Magnetfeldsensoren 34 sind grob vereinfacht als Quadrate dargestellt, welche mit unterschiedlichen Füllungen versehen sind. Die nicht gefüllten ersten Magnetfeldsensoren 34c befinden sich abseits des bewegliche Körpers 40. Sie messen allenfalls das Magnetfeld der zweiten Spulen (Nr. 22 in Fig. 4). Die schraffierten ersten Magnetfeldsensoren 34a befinden sich im Bereich eines Magnetfelds eines Permanentmagneten 50 am beweglichen Körper 40. Deren Magnetfeldsignal 35 wird in der Positionsbestimmungsvorrichtung 31 verwendet, um die Position des beweglichen Körpers 40 relativ zum Stator 20 zu bestimmen. Die punktierten ersten Magnetfeldsensoren 34b befinden sich im Bereich eines Magnetfelds einer ersten Magnetfelderzeugungsvorrichtung 43 am beweglichen Körper 40. Deren Magnetfeldsignal 35 wird in der Demodulationsvorrichtung 32 verwendet, um Informationen vom beweglichen Körper 40 zum Stator 20 zu übertragen. Um auch eine Informationsübertragung in Gegenrichtung zu ermöglichen, ist am beweglichen Körper 40 ein zweiter Magnetfeldsensor 47 vorgesehen, welcher analog zu den ersten Magnetfeldsensoren 34 ausgebildet ist. Am Stator 20 ist eine zweite Magnetfelderzeugungsvorrichtung 28 vorgesehen, welche analog zur ersten Magnetfelderzeugungsvorrichtung 43 ausgebildet ist. Alternativ ist es denkbar, die zweiten Spulen 22 als zweite Magnetfelderzeugungsvorrichtung zu verwenden. Die Datenübertragung vom Stator 20 zum beweglichen Körper 40 ist vorliegend nur möglich, wenn der bewegliche Körper 40 so angeordnet ist, dass sich der zweite Magnetfeldsensor 47 über der zweiten Magnetfelderzeugungsvorrichtung 28 befindet. Es ist aber auch denkbar, eine Vielzahl von rasterartig angeordneten zweiten Magnetfelderzeugungsvorrichtungen 28 zu verwenden, so dass die Datenübertragung vom Stator 20 zum beweglichen Körper 40 in jeder Stellung des beweglichen Körpers 40 möglich ist.

Unterhalb der ersten Magnetfeldsensoren 34 sind die ersten und die zweiten Leiterbahnabschnitte 23; 24 angeordnet, welche mit Bezug auf Fig. 4 näher erläutert werden. Die genannten Leiterbahnabschnitte 23; 24 sind dabei in mehreren elektrisch voneinander isolierten Schichten übereinander angeordnet. Dabei können zweite oder mehr Schichten vorgesehen sein, welche über Durchkontaktierungen elektrisch so miteinander verbunden sind, dass sich die gewünschte Spulenanordnung ergibt. Der Stator 20 hat einen plattenartigen Grundkörper 26, welcher die vorstehend erläuterten Komponenten trägt, wobei er dem Stator 20 die gewünschte Stabilität verleiht.

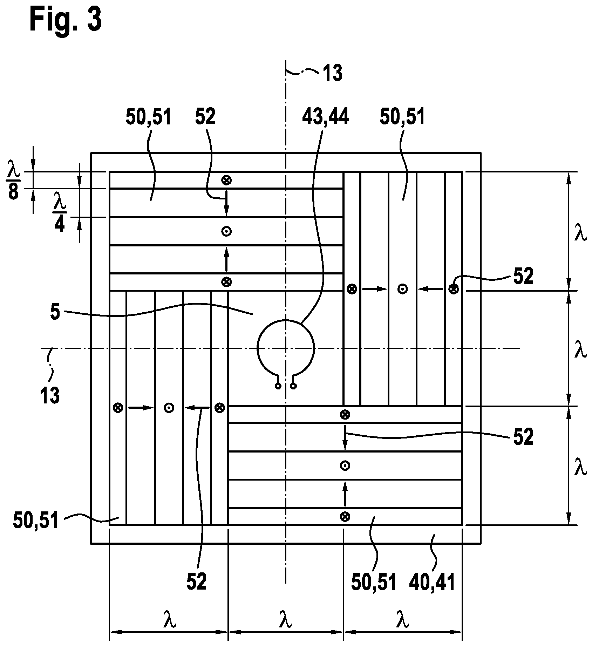

Der bewegliche Körper 40 ist vorliegend in der Art eines Werkstückträgers ausgebildet, auf dem beispielsweise (nicht dargestellte) Werkstücke innerhalb einer Fertigungsanlage transportiert werden können. Der bewegliche Körper 40 hat eine Grundplatte 41, welche eine konstante Dicke aufweist, wobei sie beispielsweise einen quadratischen Umriss aufweist. Unten an der Grundplatte 41 sind mehrere Permanentmagnete 50 befestigt, insbesondere angeklebt, welche mehrere Permanentmagnetanordnungen 51 bilden, die mit Bezug auf Fig. 3 näher erläutert werden. Zwischen den Permanentmagnetanordnungen 51 ist die bereits angesprochene erste Magnetfelderzeugungsvorrichtung 43 angeordnet, die beispielsweise eine erste Spule (Nr. 44 in Fig. 3) umfasst. Die Permanentmagnete 50 und die erste Magnetfelderzeugungsvorrichtung 43 sind vorzugsweise so beabstandet voneinander angeordnet, dass sich deren Magnetfelder möglichst wenig gegeneinander beeinflussen. Dabei wird vorzugsweise ausgenutzt, dass die in Fig. 3 dargestellte Anordnung von Permanentmagneten 50 im Zentrum ein näherungsweise konstantes Magnetfeld aufweist.

Die Permanentmagnete 50, die erste Magnetfelderzeugungsvorrichtung 43 und der zweite Magnetfeldsensor 47 werden vorzugsweise von einer zweiten Abdeckung 42 überdeckt, welche analog zur ersten Abdeckung 27 ausgebildet ist, wobei sie insbesondere eine ebene Oberfläche aufweist, welche der Bewegungsoberfläche 21 gegenüber steht.

Die ersten Magnetfeldsensoren 34 sind über (nicht dargestellte) Verbindungsleitungen an eine Filtervorrichtung 30 angeschlossen 36. Dort werden die Magnetfeldsignale 35 der ersten Magnetfeldsensoren 34 insbesondere einer Hoch- und einer Tiefpassfilterung unterzogen, wobei weitere Filter angewendet werden können, um Signalstörungen zu unterdrücken. Die niederfrequenten Signalanteile werden der Positionsbestimmungsvorrichtung 31 zugeführt, um die Position des beweglichen Körpers 40 relativ zum Stator 20 zu bestimmen. Bei der Positionsbestimmung wird u.a. ausgenutzt, dass die Permanentmagnete 50 ein starkes Magnetfeld erzeugen, so dass alle Magnetfeldsignale 35 unberücksichtigt bleiben können, die sich um die Abmessungen des Werkstückträgers abseits der stärksten Magnetfeldsignale 35 befinden. Aus den verbleibenden, gefilterten Magnetfeldsignalen 35 wird eine Position des beweglichen Körpers 40 errechnet, die mit der bekannten Anordnung der Permanentmagnete 50 innerhalb des beweglichen Körpers 40 entsprechend Fig. 3 kompatibel ist. Diese Position wird an eine Steuervorrichtung 33 übertragen, welche wiederum die Ströme in den zweiten Spulen 22 errechnet, die erforderlich sind, um den beweglichen Körper 40 in die gewünschte Position zu bewegen.

Aus der nunmehr bekannten Position des beweglichen Körpers 40 ergibt sich außerdem, welche ersten Magnetfeldsensoren 34b im Magnetfeld der ersten Magnetfelderzeugungsvorrichtung 43 angeordnet sind. Deren Magnetfeldsignal 35 wird in der Demodulationsvorrichtung 32 weiterverarbeitet, wobei es vorzugsweise in der Filtervorrichtung 30 zuvor hochpassgefiltert wurde, um Störeinflüsse der Permanentmagnete 50 zu minimieren.

Die erste Magnetfelderzeugungsvorrichtung 43 ist an eine Modulationsvorrichtung 45 angeschlossen, welche am beweglichen Körper 40 angeordnet ist. Mit der Modulationsvorrichtung 45 wird eine zu übertragende Information auf das magnetische Wechselfeld der ersten Magnetfelderzeugungsvorrichtung 43 aufmoduliert. Bei der zu übertragenden Information kann es sich beispielsweise um eine eindeutige Kennnummer des beweglichen Körpers 40 handeln, so dass mit einem Stator 20 mehrere bewegliche Körper verwendet werden können, welche von der Steuervorrichtung 33 anhand der genannten Kennnummer eindeutig voneinander unterschieden werden können. Bei der entsprechenden Modulation kann es sich beispielsweise um eine Amplitudenmodulation, eine Frequenzmodulation, eine Phasenmodulation oder eine beliebige Kombination hieraus handeln. Vorzugsweise erzeugt die Modulationsvorrichtung 45 eine entsprechend modulierte Wechselspannung, welche mittels eines Verstärkers in die erste Spule (Nr. 44 in Fig. 3) eingespeist wird. Die Frequenz dieser Wechselspannung ist vorzugsweise kleiner als 100 kHz und höchst vorzugsweise kleiner als 10 kHz gewählt, damit das entsprechende magnetische Wechselfeld durch Wirbelströme in der ersten und der zweiten Abdeckung 27; 42 möglichst wenig gedämpft wird. Es versteht sich, dass bei derart niedrigen Frequenzen nur geringe Datenübertragungsraten erzielbar sind, die aber zur Übertragung der oben angesprochenen Kennnummer bei weitem ausreichen. Weiter ist darauf hinzuweisen, dass derartige niederfrequente magnetische Wechselfelder besonders gut mit den ersten Magnetfeldsensoren 34 messbar sind, welche auch zur Positionsbestimmung verwendet werden. Diese sind so ausgelegt, dass insbesondere statische Magnetfelder messbar sind, wobei beispielsweise Hall-Sensoren, GMR-Sensoren oder MEMS-Sensoren Verwendung finden. Die in anderen induktiven Datenübertragungsvorrichtungen eingesetzten Spulen sind im Rahmen der vorliegenden Erfindung als erste Magnetfeldsensoren dagegen nicht verwendbar, da mit einer Spule das weitgehend statische Magnetfeld der Permanentmagnete 50 nicht messbar ist.

Die Demodulationsvorrichtung 32 ist so ausgebildet, dass sie die in der Modulationsvorrichtung 45 vorgenommene Modulation wieder rückgängig machen kann, um die zu übertragenden Informationen aus den Magnetfeldsignalen 35 zu ermitteln. Die Demodulationsvorrichtung 32 ist an die Steuervorrichtung 33 angeschlossen, um die zu übertragende Information, insbesondere die Kennnummer des beweglichen Körpers 40, zu übertragen.

Die erste Datenübertragungsvorrichtung 43 und die Modulationsvorrichtung 45 und gewünschtenfalls der zweite Magnetfeldsensor 47 sind zwecks elektrischer Energiezufuhr an eine Energieversorgungsvorrichtung 46 angeschlossen, die beispielsweise als wiederaufladbare Batterie ausgeführt sein kann.

Fig. 2 zeigt eine grobschematische Draufsicht der Bewegungsvorrichtung 10 nach Fig. 1. Die Bewegungsvorrichtung 10 hat vorliegend eine erste und eine zweite Achse 11; 12, welche die translatorischen Hauptbewegungsrichtungen, in der lange Bewegungswege entlang der Bewegungsoberfläche 21 möglich sind, definieren. Die erste und die zweite Achse 11; 12 sind vorliegend senkrecht zueinander ausgerichtet. Hierbei ist anzumerken, dass auch andere Anordnungen denkbar sind, welche insbesondere in der US 9 202 719 B2 beschrieben sind. Der gesamte Inhalt der US 9 202 719 B2 wird in Bezug genommen und zum Inhalt der vorliegenden Anmeldung gemacht.

Die ersten Magnetfeldsensoren 34 sind rasterartig verteilt über die Bewegungsoberfläche 21 angeordnet, wobei das entsprechende Raster parallel zur ersten und zur zweiten Achse 11; 12 ausgerichtet ist. Das Raster hat in Richtung der ersten und der zweiten Achse 11; 12 die gleiche erste Teilung δ. Die ersten Magnetfeldsensoren 34 sind grob vereinfacht als Quadrate dargestellt, wobei die Füllung der Quadrate wie in Fig. 1 die Lage der ersten Magnetfeldsensoren 34a; 34b; 34c gegenüber dem beweglichen Körper 40 angibt.

Der Außenumriss der Grundplatte 41 des beweglichen Körpers 40 ist beispielsweise quadratisch ausgebildet. An der Unterseite der Grundplatte 41 sind vorliegend insgesamt vier Permanentmagnetanordnungen 51 angeordnet, welche jeweils rechteckig ausgebildet sind, wobei sie ringartig aneinander angrenzen, so dass sich im Zentrum ein quadratischer Freiraum 53 ergibt. Die Permanentmagnetanordnungen 51 sind jeweils parallel zu einer jeweils zugeordneten dritten Achse 13 ausgerichtet, wobei vorliegend zwei dritte Achsen 13 vorhanden sind. Diese fallen in der dargestellten Stellung des beweglichen Körpers 40 mit der ersten und der zweiten Achse 11; 12 zusammen. Hierbei ist anzumerken, dass der bewegliche Körper 40 durch geeignete Bestromung der zweiten Spulen (Nr. 22 in Fig. 4) um eine Achse gedreht werden kann, welche senkrecht zur Zeichenebene der Fig. 2 ausgerichtet ist, so dass die dritten Achsen 13 nicht mehr mit der ersten und der zweiten Achse 11; 12 zusammenfallen. Die beiden dritten Achsen 13 sind senkrecht zueinander ausgerichtet.

In dem bereits angesprochenen Freiraum 53 ist die erste Magnetfelderzeugungsvorrichtung 43 angeordnet. In Fig. 2 ist zu erkennen, dass die mit 34b gekennzeichneten, punktierten ersten Magnetfeldsensoren im Wesentlichen ausschließlich im Magnetfeld der ersten Magnetfelderzeugungsvorrichtung 43 angeordnet sind. Die mit 34a gekennzeichneten, schraffierten ersten Magnetfeldsensoren sind im Wesentlichen ausschließlich im Magnetfeld der ersten Permanentmagnetanordnung 51 angeordnet. Hierbei ist anzumerken, dass das Feld der Permanentmagnetanordnungen 51 im Freiraum 53 vergleichsweise schwach ist.

Fig. 3 zeigt eine grobschematische Ansicht des beweglichen Körpers 40 vom Stator her. Die Magnetfeldanordnungen 51 sind beispielsweise aus einzelnen stabförmigen Permanentmagneten 50 zusammengesetzt, welche auf die Grundplatte 41 aufgeklebt sind. Die Permanentmagnete 50 haben jeweils die mit den Pfeilsymbolen 52 angegebene Magnetisierungsrichtung, die sich in Richtung einer zugeordneten ersten Achse 11 periodisch ändert. Die Magnetisierungsrichtungen 52 wurden entsprechend einem bekannten linearen Hallbach-Array gewählt, so dass die Magnetfeldanordnungen 51 jeweils auf der dem Stator zugewandten Seite das stärkste Magnetfeld aufweisen. Die einzelnen Permanentmagnete 50 erstrecken sich mit einer konstanten rechteckigen Querschnittsform quer zur zugeordneten dritten Achse 13. Hinzuweisen ist auf die in Fig. 3 eingezeichneten Abmessungen der Permanentmagnete 50, die ausgehend von einer zweiten Teilung λ gewählt sind. Die entsprechenden Maße sind so gewählt, dass alle einer dritten Achse 13 zugeordneten Magnetisierungsrichtungen 52 sich periodisch fortsetzen, auch wenn sie verschiedenen Permanentmagnetanordnungen 51 zugeordnet sind. Es versteht sich, dass die einzelnen Permanentmagnetanordnungen 51 oder auch alle Permanentmagnetanordnungen 51 aus einem Stück herstellbar sind, welches eine analoge Magnetisierung aufweist.

In dem bereits angesprochenen Freiraum 53 ist die bereits angesprochene erste Spule 44 der ersten Magnetfelderzeugungsvorrichtung 43 angeordnet. Diese ist aus Vereinfachungsgründen mit nur einem Windungsumlauf dargestellt, wobei sie vorzugsweise mehrere Windungsumläufe aufweist.

Fig. 4 zeigt eine grobschematische Draufsicht der zweiten Spulen 22. Die zweiten Spulen 22 umfassen eine Vielzahl von ersten Leiterbahnabschnitten 23, welche sich parallel zur ersten Achse 11 erstrecken, wobei sie gleichförmig verteilt entlang der zweiten Achse 12 angeordnet sind. Durch geeignete Bestromung der ersten Leiterbahnabschnitte 23 kann der bewegliche Körper entlang der zweiten Achse 12 bewegt werden. Die zweiten Spulen 22 umfassen außerdem eine Vielzahl von zweiten Leiterbahnabschnitten 24, welche sich parallel zur zweiten Achse 12 erstrecken, wobei sei gleichförmig verteilt entlang der zweiten Achse 12 angeordnet sind. Durch geeignete Bestromung der zweiten Leiterbahnabschnitte 24 kann der bewegliche Körper entlang der ersten Achse 11 bewegt werden. An ihren Enden sind die ersten bzw. die zweiten Leiterbahnabschnitte 23; 24 so verbunden, dass sich die zweiten Spulen 22 ergeben. In Fig. 4 sind die zweiten Spulen 22 der Einfachheit halber mit nur einem Windungsumlauf dargestellt, wobei sie tatsächlich mehrere Windungsumläufe aufweisen. In Fig. 4 ist rein beispielhaft bezüglich der ersten und der zweiten Achse 11; 12 jeweils eine 3-Phasen-Anordnungung der ersten Spulen 22 gezeigt, wobei auch eine andere Anzahl an Phasen denkbar ist. Die Verschaltung der Leiterbahnabschnitte 23; 24 kann mittels geeigneter (nicht dargestellter) Schaltvorrichtungen im Betrieb dynamisch verändert werden, insbesondere, um die Anzahl der erforderlichen Verstärker 25 zu minimieren.

Alle ersten Spulen 44 haben jeweils zwei Anschlüsse 29, über die sie an einen Verstärker 25 angeschlossen sind. Der Verstärker 25 ist mit der bereits angesprochenen Steuervorrichtung 33 verbunden, welche den Verstärker 25 so ansteuert, dass die für die gewünschte Bewegung des beweglichen Körpers erforderlichen Ströme in die ersten und die zweiten Leiterbahnabschnitte 23; 24 eingespeist werden.

### Bezugszeichen

- 10: Bewegungsvorrichtung
- 11: erste Achse
- 12: zweite Achse
- 13: dritte Achse

- 20: Stator
- 21: Bewegungsoberfläche
- 22: zweite Spule
- 23: erster Leiterbahnabschnitt
- 24: zweiter Leiterbahnabschnitt
- 25: Verstärker
- 26: Grundkörper
- 27: erste Abdeckung
- 28: zweite Magnetfelderzeugungsvorrichtung
- 29: Anschluss der ersten Spulen

- 30: Filtervorrichtung
- 31: Positionsbestimmungsvorrichtung
- 32: Demodulationsvorrichtung
- 33: Steuervorrichtung
- 34: erster Magenfeldsensor
- 34a: erster Magnetfeldsensor im Magnetfeld einer Permanentmagnetanordnung
- 34b: erster Magnetfeldsensor im Magnetfeld der ersten Magnetfelderzeugungsvorrichtung
- 34c: erster Magnetfeldsensor außerhalb des beweglichen Körpers
- 35: Magnetfeldsignal
- 36: Anschluss der ersten Magnetfeldsensoren
- 40: beweglicher Körper
- 41: Grundplatte
- 42: zweite Abdeckung
- 43: erste Magnetfelderzeugungsvorrichtung
- 44: erste Spule
- 45: Modulationsvorrichtung
- 46: Energieversorgungsvorrichtung
- 47: zweiter Magnetfeldsensor

- 50: Permanentmagnet
- 51: Permanentmagnetanordnung
- 52: Magnetisierungsrichtung
- 53: Freiraum

## Patentansprüche

1. Bewegungsvorrichtung (10) mit einem Stator (20) und zumindest einem relativ zum Stator (20) beweglichen Körper (40), wobei der Stator (20) eine Bewegungsoberfläche (21) aufweist, wobei der bewegliche Körper (40) benachbart zur Bewegungsoberfläche (21) angeordnet ist, wobei der bewegliche Körper (40) mit zumindest einem Permanentmagneten (50) versehen ist,
wobei der Stator (20) eine Vielzahl von ersten Magnetfeldsensoren (34) aufweist, welche derart verteilt im Bereich der Bewegungsoberfläche (21) angeordnet sind, dass in jeder Stellung des beweglichen Körpers (40) relativ zum Stator (20) ein Magnetfeld des zumindest einen Permanentmagneten (50) mit zumindest einem ersten Magnetfeldsensor (34) messbar ist,wobei der bewegliche Körper (40) zumindest eine erste Magnetfelderzeugungsvorrichtung (43) aufweist, welche derart abseits des zumindest einen Permanentmagneten (50) angeordnet ist, dass ein Magnetfeld der ersten Magnetfelderzeugungsvorrichtung (43) mit zumindest einem ersten Magnetfeldsensor (34) messbar ist,
**dadurch gekennzeichnet, dass** der zumindest eine bewegliche Körper (40) jeweils eine zugeordnete Modulationsvorrichtung (45) aufweist, welche an die erste Magnetfelderzeugungsvorrichtung (43) angeschlossen ist, wobei die Modulationsvorrichtung (45) so eingerichtet ist, dass mittels der ersten Magnetfelderzeugungsvorrichtung (43) ein magnetisches Wechselfeld erzeugbar ist, auf dem eine zu übertragende Information aufmoduliert ist.

2. Bewegungsvorrichtung nach Anspruch 1,
wobei die erste Magnetfelderzeugungsvorrichtung (43) zumindest eine erste Spule (44) umfasst, welche derart abseits des zumindest einen Permanentmagneten (50) angeordnet ist, dass ein Magnetfeld der zumindest einen ersten Spule (44) mit zumindest einem ersten Magnetfeldsensor (34) messbar ist.

3. Bewegungsvorrichtung nach einem der vorstehenden Ansprüche,
wobei die ersten Magnetfeldsensoren (34) derart verteilt im Bereich der Bewegungsoberfläche (21) angeordnet sind, dass in jeder Stellung des beweglichen Körpers (40) relativ zum Stator (20) das Magnetfeld der ersten Magnetfelderzeugungsvorrichtung (43) mit zumindest einem ersten Magnetfeldsensor (34) messbar ist.

4. Bewegungsvorrichtung nach einem der vorstehenden Ansprüche,
wobei der Stator (20) eine Vielzahl von langgestreckten zweiten Spulen (22) aufweist, wobei die zweiten Spulen (22) eine Vielzahl von ersten und eine Vielzahl von zweiten Leiterbahnabschnitten (23; 24) umfassen, wobei sich die ersten Leiterbahnabschnitte (22) in Richtung einer ersten Achse (11) erstrecken, wobei sich die zweiten Leiterbahnabschnitte (24) in Richtung einer von der ersten (11) verschiedenen zweiten Achse (12) erstrecken,
wobei der bewegliche Körper (40) zumindest zwei Permanentmagnetanordnungen (51) umfasst, wobei jede Permanentmagnetanordnung (51) in Richtung einer zugeordneten dritten Achse (13) eine sich periodisch ändernde Magnetisierungsrichtung (52) aufweist, wobei zumindest zwei verschiedene dritte Achsen (13) vorhanden sind,
wobei zumindest ein Verstärker (25) vorgesehen ist, mit dem Strom in die ersten und/oder die zweiten Leiterbahnabschnitte (23; 24) derart einspeisbar ist, dass sich der bewegliche Körper (40) relativ zum Stator (20) bewegt,
wobei die ersten Magnetfeldsensoren (34) derart verteilt im Bereich der Bewegungsoberfläche (21) angeordnet sind, dass in jeder Stellung des beweglichen Körpers (40) relativ zum Stator (20) für jede Permanentmagnetanordnung (51) zumindest ein erster Magnetfeldsensor (34) vorhanden ist, mit dem ein betreffendes Magnetfeld messbar ist.

5. Bewegungsvorrichtung nach Anspruch 4,
wobei die Permanentmagnetanordnungen (51) einen Freiraum (53) umgrenzen, wobei zumindest eine erste Magnetfelderzeugungsvorrichtung (43) innerhalb des Freiraums (53) angeordnet ist.

6. Bewegungsvorrichtung nach einem der vorstehenden Ansprüche,
wobei die Bewegungsoberfläche (21) von einer ersten Abdeckung (27) aus Metall gebildet wird, wobei die ersten Magnetfeldsensoren (34) und gewünschtenfalls die zweiten Spulen (22) von der ersten Abdeckung (27) überdeckt sind.

7. Bewegungsvorrichtung nach einem der vorstehenden Ansprüche,
wobei die ersten Magnetfeldsensoren (34) an eine Positionsbestimmungsvorrichtung (31) angeschlossen sind, um von den ersten Magnetfeldsensoren (34) ausgebbare Magnetfeldsignale (35) an die Positionsbestimmungsvorrichtung (31) zu übertragen, wobei die Positionsbestimmungsvorrichtung (31) so eingerichtet ist, dass unter Verwendung der Magnetfeldsignale (35) die Stellung des beweglichen Körpers (40) relativ zum Stator (20) bestimmbar ist.

8. Bewegungsvorrichtung nach einem der vorstehenden Ansprüche,
wobei die ersten Magnetfeldsensoren (34) an eine Demodulationsvorrichtung (32) angeschlossen sind, welche derart eingerichtet ist, dass die zu übertragende Information durch Demodulation aus den Magnetfeldsignalen (35) der ersten Magnetfeldsensoren (34) ermittelbar ist.

9. Bewegungsvorrichtung nach einem der vorstehenden Ansprüche,
wobei zumindest ein beweglicher Körper (40) jeweils eine zugeordnete Energieversorgungsvorrichtung (46) aufweist, wobei die erste Magnetfelderzeugungsvorrichtung (43) und/oder die Modulationsvorrichtung (45) an die Energieversorgungsvorrichtung (46) angeschlossen sind.

10. Bewegungsvorrichtung nach einem der vorstehenden Ansprüche,
wobei mehrere erste Magnetfelderzeugungsvorrichtungen (43) vorgesehen sind, die derart beabstandet voneinander angeordnet sind, dass deren Magnetfeld von unterschiedlichen ersten Magnetfeldsensoren (34) messbar ist.

11. Bewegungsvorrichtung nach einem der vorstehenden Ansprüche,
wobei der Stator (20) wenigstens eine zweite Magnetfelderzeugungsvorrichtung (28) aufweist, wobei der bewegliche Körper (40) wenigstens einen zweiten Magnetfeldsensor (47) aufweist, welcher durch Bewegung des beweglichen Körpers (40) in einen Feldbereich einer zweiten Magnetfelderzeugungsvorrichtung (28) bringbar ist.

12. Verfahren zum Betrieb einer Bewegungsvorrichtung nach einem der vorstehenden Ansprüche,
wobei mittels der ersten Magnetfelderzeugungsvorrichtung (43) ein magnetisches Wechselfeld erzeugt wird, dessen Frequenz kleiner als 100 kHz und vorzugsweise kleiner als 10 kHz ist, und
wobei dem magnetischen Wechselfeld eine zu übertragende Information aufmoduliert ist.

## Claims

1. Movement apparatus (10) comprising a stator (20) and at least one body (40) which can move relative to the stator (20), wherein the stator (20) has a movement surface (21), wherein the movable body (40) is arranged adjacent to the movement surface (21), wherein the movable body (40) is provided with at least one permanent magnet (50),
wherein the stator (20) has a large number of first magnetic field sensors (34) which are arranged in a manner distributed in the region of the movement surface (21) in such a way that a magnetic field of the at least one permanent magnet (50) can be measured using at least one first magnetic field sensor (34) in each position of the movable body (40) relative to the stator (20), wherein the movable body (40) has at least one first magnetic field generating apparatus (43) which is arranged on the other side of the at least one permanent magnet (50) in such a way that a magnetic field of the first magnetic field generating apparatus (43) can be measured using at least one first magnetic field sensor (34),
**characterized in that** the at least one movable body (40) has in each case one associated modulation apparatus (45) which is connected to the first magnetic field generating apparatus (43), wherein the modulation apparatus (45) is designed such that an alternating magnetic field can be generated by means of the first magnetic field generating apparatus (43), an item of information to be transmitted being modulated onto the said alternating magnetic field.

2. Movement apparatus according to Claim 1,
wherein the first magnetic field generating apparatus (43) comprises at least one first coil (44) which is arranged on the other side of the at least one permanent magnet (50) in such a way that a magnetic field of the at least one first coil (44) can be measured using at least one first magnetic field sensor (34).

3. Movement apparatus according to either of the preceding claims,
wherein the first magnetic field sensors (34) are arranged in a manner distributed in the region of the movement surface (21) in such a way that the magnetic field of the first magnetic field generating apparatus (43) can be measured using at least one first magnetic field sensor (34) in each position of the movable body (40) relative to the stator (20) .

4. Movement apparatus according to one of the preceding claims,
wherein the stator (20) has a large number of elongate second coils (22), wherein the second coils (22) comprise a large number of first and a large number of second conductor track sections (23; 24), wherein the first conductor track sections (23) extend in the direction of a first axis (11), wherein the second conductor track sections (24) extend in the direction of a second axis (12) which is different from the first axis (11), wherein the movable body (40) comprises at least two permanent magnet arrangements (51), wherein each permanent magnet arrangement (51) has a periodically changing magnetization direction (52) in the direction of an associated third axis (13), wherein there are at least two different third axes (13),
wherein at least one amplifier (25) is provided, with which current can be fed into the first and/or the second conductor track sections (23; 24) in such a way that the movable body (40) moves relative to the stator (20),
wherein the first magnetic field sensors (34) are arranged in a manner distributed in the region of the movement surface (21) in such a way that there is at least one first magnetic field sensor (34), using which a relevant magnetic field can be measured, for each permanent magnet arrangement (51) in each position of the movable body (40) relative to the stator (20).

5. Movement apparatus according to Claim 4,
wherein the permanent magnet arrangements (51) surround a clearance (53), wherein at least one first magnetic field generating apparatus (43) is arranged within the clearance (53).

6. Movement apparatus according to one of the preceding claims,
wherein the movement surface (21) is formed by a first cover (27) composed of metal, wherein the first magnetic field sensors (34) and, if desired, the second coils (22) are covered by the first cover (27).

7. Movement apparatus according to one of the preceding claims,
wherein the first magnetic field sensors (34) are connected to a position determining apparatus (31) in order to transmit magnetic field signals (35), which can be output by the first magnetic field sensors (34), to the position determining apparatus (31), wherein the position determining apparatus (31) is designed such that the position of the movable body (40) relative to the stator (20) can be determined using the magnetic field signals (35).

8. Movement apparatus according to one of the preceding claims,
wherein the first magnetic field sensors (34) are connected to a demodulation apparatus (32) which is designed in such a way that the information to be transmitted can be ascertained from the magnetic field signals (35) of the first magnetic field sensors (34) by demodulation.

9. Movement apparatus according to one of the preceding claims,
wherein at least one movable body (40) in each case has an associated energy supply apparatus (46), wherein the first magnetic field generating apparatus (43) and/or the modulation apparatus (45) are connected to the energy supply apparatus (46).

10. Movement apparatus according to one of the preceding claims,
wherein a plurality of first magnetic field generating apparatuses (43) are provided, which are arranged at a distance from one another in such a way that their magnetic field can be measured by different first magnetic field sensors (34).

11. Movement apparatus according to one of the preceding claims,
wherein the stator (20) has at least one second magnetic field generating apparatus (28), wherein the movable body (40) has at least one second magnetic field sensor (47) which can be moved into a field region of a second magnetic field generating apparatus (28) by moving the movable body (40).

12. Method for operating a movement apparatus according to one of the preceding claims,
wherein an alternating magnetic field is generated by means of the first magnetic field generating apparatus (43), the frequency of the said alternating magnetic field being less than 100 kHz and preferably less than 10 kHz, and wherein an item of information to be transmitted is modulated onto the alternating magnetic field.

## Revendications

1. Dispositif de mouvement (10) comportant un stator (20) et au moins un corps (40) mobile par rapport au stator (20), dans lequel le stator (20) présente une surface de mouvement (21), dans lequel le corps mobile (40) est disposé de manière adjacente à la surface de mouvement (21), dans lequel le corps mobile (40) est pourvu d'au moins un aimant permanent (50),
dans lequel le stator (20) comporte une pluralité de premiers capteurs de champ magnétique (34) qui sont disposés de manière répartie dans la zone de la surface de mouvement (21) de telle sorte que, dans chaque position du corps mobile (40) par rapport au stator (20), un champ magnétique dudit au moins un aimant permanent (50) puisse être mesuré au moyen d'au moins un premier capteur de champ magnétique (34), dans lequel le corps mobile (40) comporte au moins un premier dispositif générateur de champ magnétique (43) disposé à l'écart de l'aimant permanent (50) de manière à ce qu'un champ magnétique du premier dispositif générateur de champ magnétique (43) puisse être mesuré au moyen d'au moins un premier capteur de champ magnétique (34),
**caractérisé en ce que** ledit au moins un corps mobile (40) comporte respectivement un dispositif de modulation (45) associé connecté audit premier dispositif générateur de champ magnétique (43), dans lequel le dispositif de modulation (45) est conçu de manière à ce qu'un champ magnétique alternatif sur lequel est modulée une information à transmettre puisse être généré au moyen du premier dispositif générateur de champ magnétique (43).

2. Dispositif de mouvement selon la revendication 1,
dans lequel le premier dispositif générateur de champ magnétique (43) comprend au moins une première bobine (44) qui est disposée à l'écart dudit au moins un aimant permanent (50) de manière à ce qu'un champ magnétique de ladite au moins une première bobine (44) puisse être mesuré au moyen d'au moins un premier capteur de champ magnétique (34) .

3. Dispositif de mouvement selon l'une des revendications précédentes,
dans lequel les premiers capteurs de champ magnétique (34) sont disposés de manière répartie dans la zone de la surface de mouvement (21) de telle sorte que, dans chaque position du corps mobile (40) par rapport au stator (20), le champ magnétique du premier dispositif générateur de champ magnétique (43) puisse être mesuré au moyen d'au moins un premier capteur de champ magnétique (34) .

4. Dispositif de mouvement selon l'une des revendications précédentes,
dans lequel le stator (20) comporte une pluralité de deuxièmes bobines (22) allongées, dans lequel les deuxièmes bobines (22) comprennent une pluralité de premières et une pluralité de deuxièmes parties de piste conductrice (23 ; 24), dans lequel les premières parties de piste conductrice (23) s'étendent dans la direction d'un premier axe (11), dans lequel les deuxièmes parties de piste conductrice (24) s'étendent dans la direction d'un deuxième axe (12) différent du premier (11),
dans lequel le corps mobile (40) comprend au moins deux ensembles d'aimants permanents (51), dans lequel chaque ensemble d'aimants permanents (51) présente une direction d'aimantation (52) variant périodiquement dans la direction d'un troisième axe (13) associé, dans lequel au moins deux troisièmes axes différents (13) sont présents,
dans lequel il est prévu au moins un amplificateur (25) permettant d'alimenter en courant les premières et/ou deuxièmes parties de piste conductrice (23 ; 24) de manière à ce que le corps mobile (40) se déplace par rapport au stator (20),
dans lequel les premiers capteurs de champ magnétique (34) sont disposés de manière répartie dans la zone de la surface de mouvement (21) de telle sorte que, dans chaque position du corps mobile (40) par rapport au stator (20), il existe au moins un premier capteur de champ magnétique (34) pour chaque ensemble d'aimants permanents (51) au moyen duquel un champ magnétique respectif peut être mesuré.

5. Dispositif de mouvement selon la revendication 4,
dans lequel les ensembles d'aimants permanents (51) définissent un espace libre (53), dans lequel au moins un premier dispositif générateur de champ magnétique (43) est disposé dans ledit espace libre (53).

6. Dispositif de mouvement selon l'une des revendications précédentes,
dans lequel la surface de mouvement (21) est formée par un premier revêtement (27) constitué de métal, dans lequel les premiers capteurs de champ magnétique (34) et si nécessaire, les deuxièmes bobines (22), sont recouverts par le premier revêtement (27).

7. Dispositif de mouvement selon l'une des revendications précédentes,
dans lequel les premiers capteurs de champ magnétique (34) sont connectés à un dispositif de détermination de position (31) permettant de transmettre des signaux de champ magnétique (35) pouvant être fournis en sortie par les premiers capteurs de champ magnétique (34) au dispositif de détermination de position (31),
dans lequel le dispositif de détermination de position (31) est disposé de telle sorte que la position du corps mobile (40) par rapport au stator (20) puisse être déterminée en utilisant les signaux de champ magnétique (35) .

8. Dispositif de mouvement selon l'une des revendications précédentes,
dans lequel les premiers capteurs de champ magnétique (34) sont connectés à un dispositif de démodulation (32) qui est conçu de manière à ce que les informations à transmettre puissent être déterminées par démodulation des signaux de champ magnétique (35) des premiers capteurs de champ magnétique (34).

9. Dispositif de mouvement selon l'une des revendications précédentes,
dans lequel au moins un corps mobile (40) comporte respectivement un dispositif d'alimentation en énergie (46) associé, dans lequel le premier dispositif générateur de champ magnétique (43) et/ou le dispositif de modulation (45) sont connectés au dispositif d'alimentation en énergie (46).

10. Dispositif de mouvement selon l'une des revendications précédentes,
dans lequel il est prévu une pluralité de premiers dispositifs générateurs de champ magnétique (43) qui sont espacés les uns des autres de telle sorte que leur champ magnétique puisse être mesuré par différents premiers capteurs de champ magnétique (34).

11. Dispositif de mouvement selon l'une des revendications précédentes,
dans lequel le stator (20) comprend au moins un deuxième dispositif générateur de champ magnétique (28), dans lequel le corps mobile (40) comporte au moins un deuxième capteur de champ magnétique (47) qui peut être amené dans une zone de champ d'un deuxième dispositif générateur de champ magnétique (28) par déplacement du corps mobile (40) .

12. Procédé pour faire fonctionner un dispositif de mouvement selon l'une des affirmations précédentes,
dans lequel un champ magnétique alternatif dont la fréquence est inférieure à 100 kHz et de préférence inférieure à 10 kHz est généré au moyen du premier dispositif générateur de champ magnétique (43), et dans lequel une information à transmettre est modulée sur le champ magnétique alternatif.
